# FASCICULE DE BREVET EUROPEEN

(11) **EP 2 273 636 B1**
(45) Date de publication et mention de la délivrance du brevet: **07.05.2014**
(21) Numéro de dépôt: 10290305.1
(22) Date de dépôt: 08.06.2010
(51) Int. Cl.: H02G 3/04, H02G 3/06

(54) **Accessoire de prolongement d'un tronçon de goulotte**
Verlängerungszubehörteil eines Teilstücks einer Ablaufrinne
Accessory for extending a conduit section

(30) Priorité: 09.07.2009 FR 0903396
(43) Date de publication de la demande: 12.01.2011
(73) Titulaire: Legrand France, 87000 Limoges (FR); Legrand SNC, 87000 Limoges (FR)
(72) Inventeur: Bellanger, Jérôme, 72650 Saint Saturnin (FR); Buard, Yvon, 53600 Voutre (FR); Jarry, Patrice, 72140 Mont Saint Jean (FR)
(74) Mandataire: Orsini, Fabienne

(56) Documents cités:
- DE-A1- 3 447 646
- FR-A1- 2 772 106
- FR-A1- 2 902 245
- US-B1- 6 172 298

## Description

### DOMAINE TECHNIQUE AUQUEL SE RAPPORTE L'INVENTION

La présente invention concerne, de manière générale, les goulottes électriques destinées au logement et à la protection de conducteurs électriques ainsi qu'au logement et à la protection d'un quelconque appareillage électrique desservi par ces conducteurs.

Elle concerne plus particulièrement un accessoire de prolongement d'un tronçon de goulotte selon la partie préambule de la revendication 1.

Elle concerne également une goulotte à rapporter sur une paroi, comportant un tronçon de goulotte comprenant un socle et un couvercle rapporté sur le socle, et un tel accessoire de prolongement rapporté à une extrémité du tronçon de goulotte.

### ARRIÈRE-PLAN TECHNOLOGIQUE

Les appareillages électriques d'habitations ou de bureaux sont alimentés en courant via des conducteurs électriques fréquemment logés dans des tronçons de goulotte courant le long des murs, plafonds et sols de ces habitations et bureaux.

Il existe différentes longueurs de tronçons de goulotte pour le montage vertical ou horizontal. Il existe plus particulièrement deux références de tronçons de goulotte qui présentent des longueurs de 2,5 et 3 mètres.

Pour le montage vertical d'un tronçon de goulotte sur une paroi de hauteur différente de 2,5 ou 3 mètres, il est alors nécessaire soit de réduire la longueur du tronçon de goulotte en le coupant, soit de compléter la longueur du tronçon de goulotte en y ajoutant un morceau découpé sur autre tronçon de goulotte. L'opération de découpe du tronçon de goulotte est une opération longue, fastidieuse et difficile à réaliser pour obtenir un résultat esthétique correct.

Pour échapper à cette opération de découpe, on connaît notamment du document FR 2 902 245 un accessoire qui permet, lorsque le tronçon de goulotte présente une longueur inférieure à la hauteur de la paroi sur laquelle il est rapporté, de prolonger ce tronçon afin de l'ajuster à la hauteur de la paroi. Un tel accessoire de prolongation de goulotte se présente en deux parties, à savoir un support et un capot.

Le support présente une forme de Π, avec une traverse à fixer le long du bord supérieur de la paroi et deux longerons à engager dans le tronçon de goulotte, à une profondeur fonction de la différence de hauteurs entre la goulotte et la paroi.

Le capot est quant à lui destiné à être fixé sur le support, de manière à prolonger esthétiquement la goulotte jusqu'en haut de la paroi.

L'inconvénient principal d'un tel accessoire est qu'il est difficile à installer. En effet, pour fixer le support sur la paroi, il est nécessaire de maintenir d'une main la traverse le long du bord supérieur de la paroi, dans le prolongement de la goulotte, et de visser de l'autre main le support sur la paroi.

On connaît par ailleurs du document FR 2 772 106 un poteau d'alimentation d'un poste de travail destiné à être positionné verticalement, entre le sol et le plafond d'une pièce.

Ce poteau comporte une poutre principale de section en U sur laquelle est rapportée un capot de fermeture, et une poutre secondaire tubulaire de section carrée, montée à coulissement dans la poutre principale. Il comporte également des moyens de mise à longueur automatique du poteau qui comprennent un élément de poutre monté à coulissement dans la poutre principale, un ressort interposé entre l'élément de poutre et la poutre secondaire, et un levier de mise en compression du ressort.

Un premier inconvénient de ce poteau d'alimentation est que la poutre secondaire, qui présente une forme et une dimension différentes de celles de la poutre principale, n'est pas recouverte par un quelconque capot sur sa partie qui fait saillie au-dessus de la poutre principale. Le poteau une fois assemblé présente donc un aspect peu esthétique.

L'élément de poutre nécessite par ailleurs, lors de l'assemblage du poteau, d'être vissé dans la poutre principale afin qu'il puisse former un appui fixe pour le ressort. La mise en place d'un tel poteau est par conséquent fastidieuse.

### OBJET DE L'INVENTION

Afin de remédier à l'inconvénient précité de l'état de la technique, la présente invention propose un nouvel accessoire de prolongement qui s'ajuste automatiquement à la hauteur de la paroi, sans qu'il soit nécessaire de le maintenir en position manuellement.

Plus particulièrement, on propose selon l'invention un accessoire comportant l'ensemble des caractéristiques de la revendication 1.

Ainsi, lorsqu'un tronçon de goulotte équipé d'un accessoire selon l'invention est rapporté verticalement le long d'une paroi d'une pièce, depuis le sol jusqu'au plafond de cette pièce, les moyens de rappel permettent à l'accessoire de compenser automatiquement la différence de hauteurs existant entre le tronçon de goulotte et la paroi, en plaquant l'accessoire contre le sol ou le plafond. Cette mise à longueur automatique évite ainsi à l'accessoire d'être mal positionné, ce qui aurait pour conséquence de laisser apparaître un interstice inesthétique entre l'accessoire et le sol ou le plafond.

Les moyens de rappel permettent en outre de maintenir l'accessoire et le tronçon de goulotte contre la paroi, avant même qu'ils ne soient vissés sur celle-ci. Ces moyens de rappel facilitent ainsi la fixation du tronçon de goulotte et de l'accessoire sur la paroi, puisque l'utilisateur conserve ses deux mains libres pour l'opération de vissage.

Enfin, grâce aux moyens de rappel qui peuvent supporter le poids du tronçon de goulotte, il est possible d'installer l'accessoire au-dessus ou en dessous du tronçon de goulotte, afin de le rendre facilement accessible à l'installateur.

D'autres caractéristiques avantageuses et non limitatives de l'accessoire conforme à l'invention sont mentionnées dans les revendications 2 à 14.

L'invention concerne également une goulotte selon la revendication 15.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- les figures 1 et 2 sont des vues schématiques, sous deux angles différents, d'un premier mode de réalisation de l'accessoire de prolongement selon l'invention rapporté à une extrémité d'un tronçon de goulotte ;
- la figure 3 est une vue schématique de dessus du capot de l'accessoire de prolongement de la figure 1 ;
- la figure 4 est une vue schématique de détail des moyens de positionnement et de guidage du capot sur le support de l'accessoire de prolongement de la figure 1 ;
- la figure 5 est une vue schématique en coupe de l'accessoire de prolongement de la figure 1 ;
- la figure 6 est une vue schématique de l'accessoire de prolongement de la figure 1 assemblé au tronçon de goulotte ;
- la figure 7 est une vue schématique d'une variante de réalisation de l'accessoire de prolongement de la figure 1 ;
- les figures 8 et 9 sont des vues de détail des moyens de fixation du capot sur le support de l'accessoire de prolongement de la figure 7 ;
- la figure 10 est une vue schématique éclatée d'un second mode de réalisation de l'accessoire de prolongement selon l'invention ; et
- la figure 11 est une vue schématique de l'accessoire de prolongement de la figure 10 assemblé à deux tronçons de goulotte.

Sur les figures, on a représenté différents modes de réalisation d'une goulotte 1 ; 51 agencée pour loger des câbles, par exemple des conducteurs électriques, des conducteurs téléphoniques, ou encore des fibres optiques. Elle est à cet effet réalisée par moulage d'une matière isolante telle que le plastique.

Cette goulotte 1 ; 51 est représentée en position verticale, pour simuler la position qu'elle adopte lorsqu'elle est rapportée contre le mur d'une pièce, depuis le sol jusqu'au plafond de cette pièce. Elle s'étend donc en longueur suivant un axe vertical Z.

La goulotte 1 ; 51 comporte ici au moins un tronçon de goulotte 100 et un accessoire de prolongement 2 ; 52 de ce tronçon de goulotte 100.

Le tronçon de goulotte 100 ne fait pas à proprement parlé l'objet de la présente invention et il ne sera donc pas décrit dans le détail. Il pourra en outre présenter des formes autres que celles qui sera ici décrite et représentée.

Tel que représenté sur les figures, le tronçon de goulotte 100 se présente en deux parties, avec un socle 110 et un couvercle de fermeture de ce socle (non représenté sur les figures).

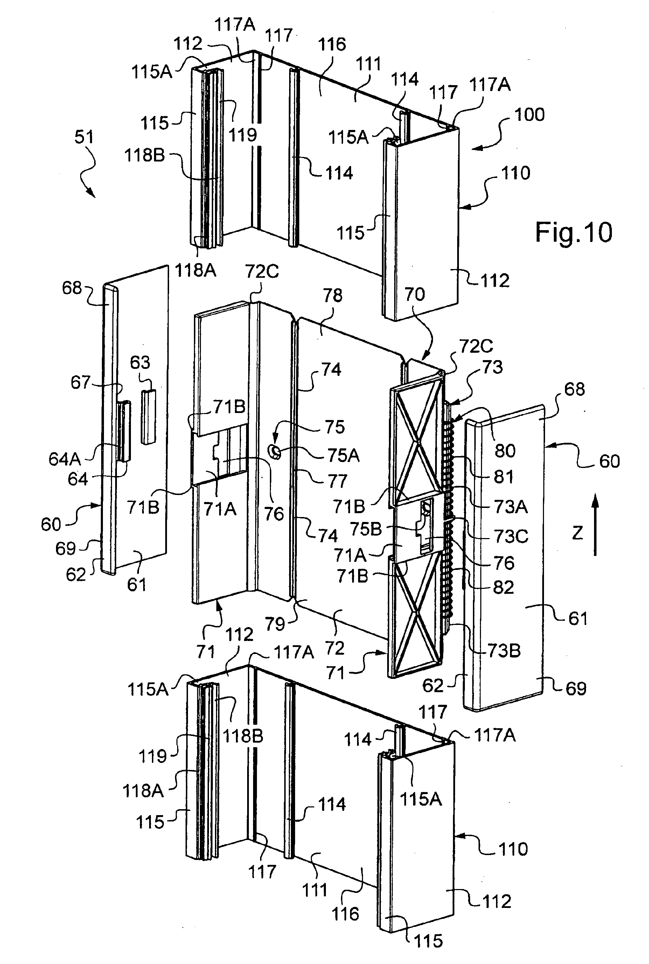

Comme cela apparaît plus particulièrement sur la figure 10, le socle 110 de chaque tronçon de goulotte 100 est un profilé qui s'étend en longueur suivant l'axe vertical Z et qui présente une section transversale en forme de U. Il comporte une paroi de fond 111 bordée de deux ailes latérales 112 pour délimiter intérieurement un logement de câbles 116.

La paroi de fond 111 du socle 110 présente une face extérieure à appliquer contre le mur et une face intérieure qui porte deux premières nervures longitudinales 114 et, de part et d'autre de ces deux premières nervures longitudinales 114, deux secondes nervures longitudinales 117 s'étendant le long de la face intérieure des ailes latérales 112.

Les premières nervures longitudinales 114 présentent des sections transversales en forme de champignon, avec un pied qui s'élève à partir de la face intérieure de la paroi de fond 111 du socle 110, perpendiculairement à celle-ci, et un chapeau en arc-de-cercle. Ces premières nervures longitudinales 114 permettent ainsi de rapporter deux cloisons de séparation (non représentées) dans le logement de câbles 116, afin de séparer ce logement en compartiments isolés pouvant abriter différents types de câbles.

Les secondes nervures longitudinales 117 présentent quant à elles des sections transversales rectangulaires. Elles s'étendent chacune à faible distance de l'une des ailes latérales 112 du socle 110, de manière à délimiter avec celle-ci une rainure 117A.

Les deux ailes latérales 112 du socle 110 comprennent des retours 115, dirigés l'un vers l'autre, qui s'étendent sensiblement dans le même plan que le couvercle de fermeture.

L'ouverture longitudinale du socle 110, définie entre ces deux retours 115, est bordée par deux parois longitudinales rentrantes 119, parallèles entre elles et parallèles aux deux ailes latérales 112 du socle 110. Chaque paroi rentrante 119 est rattachée à la face arrière du bord libre d'un retour 115, perpendiculairement à celui-ci. Chaque paroi rentrante 119 s'étend donc dans le logement de câbles 116, sous le retour 115 correspondant.

Le retour 115 et la paroi rentrante 119 correspondante délimitent, avec l'aile latérale 112 associée, une rainure 115A de section rectangulaire ouverte vers la paroi de fond 111 du socle 110. Cette rainure 115A présente une largeur égale à celle des rainures 117A délimitées par les secondes nervures longitudinales 117.

L'ouverture longitudinale du socle 110 définie ci-dessus est munie de deux bandes de clipsage aptes à permettre le montage du couvercle de fermeture (non représenté).

Plus précisément, chaque bande de clipsage comporte ici une aile longitudinale rattachée par une entretoise à l'extrémité intérieure libre de la paroi rentrante 119 correspondante. Chaque aile longitudinale et chaque entretoise associée sont situées à l'intérieur du socle 110 à distance de la face arrière du retour 115 correspondant du socle 110. Chaque entretoise définit avec l'aile latérale 112 et la paroi rentrante 119 correspondante, une gorge longitudinale 118A ouverte vers l'avant du socle 110.

Le couvercle de fermeture du socle 110, non représenté sur les figures, est un profilé qui se présente sous la forme d'une plaque plane.

Il porte perpendiculairement sur sa face arrière, en parallèle, le long de chacun de ses deux bords longitudinaux, d'une part, une rangée de pattes d'engagement destinées à s'engager dans la gorge longitudinale 118A correspondante du socle 110, et, d'autre part, une rangée de pattes d'encliquetage destinées à s'accrocher sous ladite gorge longitudinale 118A, dans l'une des rainures 118B prévues sur les faces en vis-à-vis des parois rentrantes 119.

Lorsque chaque couvercle de fermeture est monté sur le socle 110 pour fermer hermétiquement le logement de câbles 116, sa face avant s'étend à l'affleurement de la face avant des retours 115 du socle 110.

Dans les différents modes de réalisation représentés sur les figures, les tronçons de goulotte 100 présentent des longueurs normalisées strictement inférieures à la hauteur du mur sur lequel ils sont rapportés.

L'accessoire de prolongement 2 ; 52 permet alors de compléter la longueur du ou des tronçons de goulotte, de telle manière que la longueur de la goulotte 1 ; 51 s'ajuste automatiquement à la hauteur du mur.

Cet accessoire de prolongement 2 ; 52 comporte à cet effet au moins un support 20 ; 70 qui prolonge le tronçon de goulotte 100, et au moins un capot 10 ; 60 à rapporter de manière esthétique au-dessus de ce support 20 ; 70 à l'aide de moyens de positionnement 6 ; 63, en vue d'isoler le logement de câbles 116 de l'extérieur.

Chaque support 20 ; 70 comporte au moins un élément de guidage 21 ; 71 qui est monté mobile en translation dans le tronçon de goulotte 100, de manière à pouvoir ajuster la longueur de celui-ci à la hauteur du mur. Chaque élément de guidage 21 ; 71 est à cet effet agencé pour coulisser dans le tronçon de goulotte 100 entre une position rentrée à l'intérieur de ce tronçon de goulotte 100 et une position déployée dans le prolongement de ce tronçon de goulotte 100.

Selon une caractéristique particulièrement avantageuse de l'invention, il est prévu des moyens de rappel élastique 30 ; 80 des éléments de guidage 21 ; 71 en position déployée.

Ces moyens de rappel élastique 30 sont agencés pour supporter le poids du tronçon de goulotte 100, de manière à pouvoir maintenir l'extrémité haute de la goulotte 1 ; 51 en appui contre le plafond de la pièce.

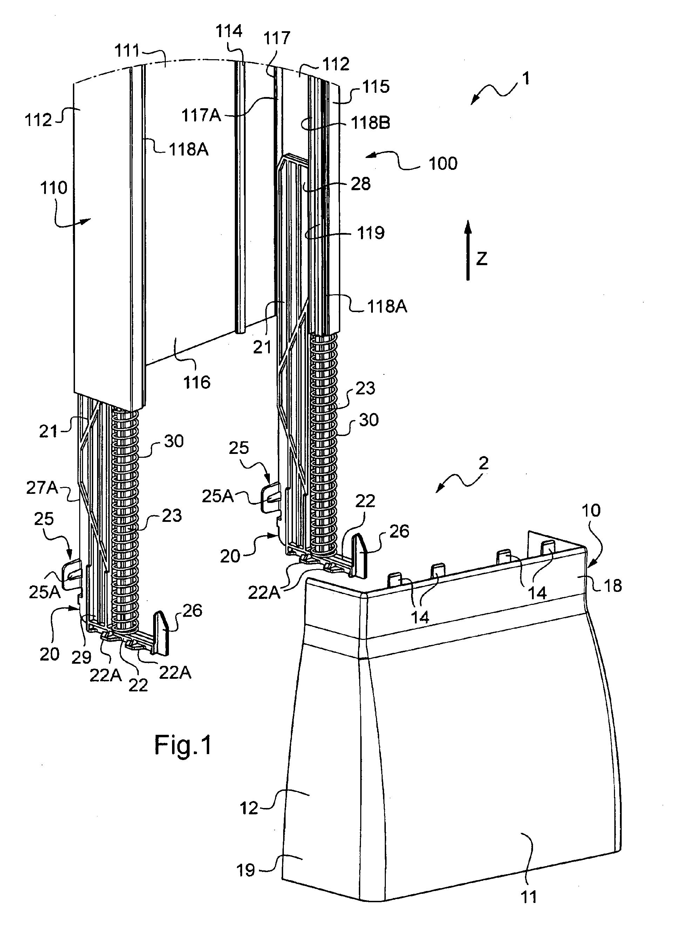

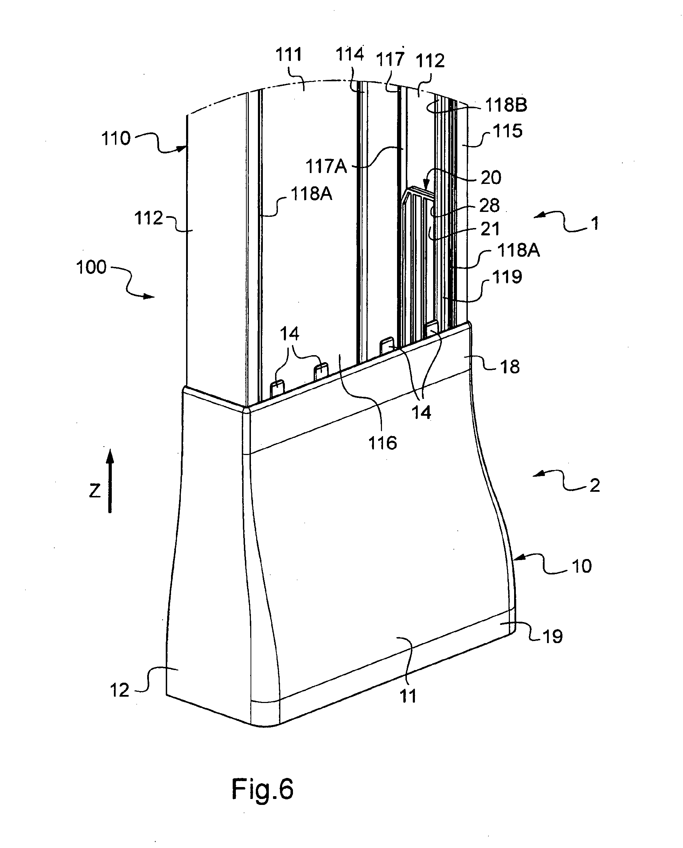

Sur les figures 1 à 6 et 7 à 9, on a représenté deux variantes d'un premier mode de réalisation de la goulotte 1, dans lequel l'accessoire de prolongement 2 forme un embout à rapporter à une extrémité du tronçon de goulotte 100.

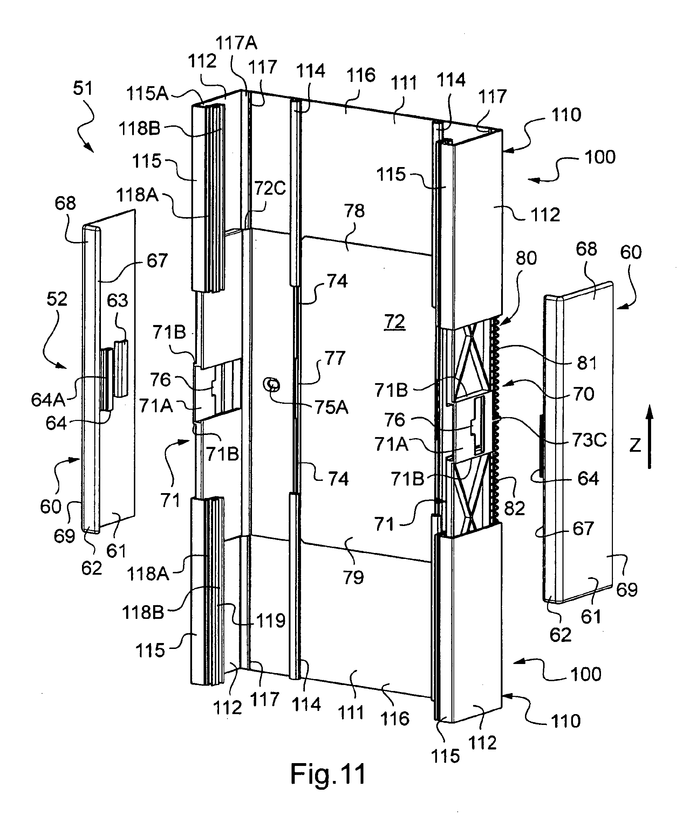

Sur les figures 10 et 11, on a représenté un second mode de réalisation de la goulotte 51, dans lequel l'accessoire de prolongement 52 forme un accessoire de jonction de deux tronçons de goulotte 100 alignés, interposé entre ces deux tronçons de goulotte 100.

Dans le premier mode de réalisation représenté sur les figures 1 à 6, la goulotte 1 comporte un unique tronçon de goulotte 100 de longueur inférieure à la hauteur du mur sur lequel elle est rapportée. L'accessoire de prolongement 2 est alors positionné du côté de l'extrémité basse du tronçon de goulotte, de manière à être plus facilement accessible.

Dans ce mode de réalisation, l'accessoire de prolongement 2 comporte deux supports 20 distincts, chacun réalisé d'une seule pièce par moulage d'une matière isolante telle que le plastique. Ces deux supports 20 sont ici identiques et issus du même moule et présentent donc un coût de fabrication réduit.

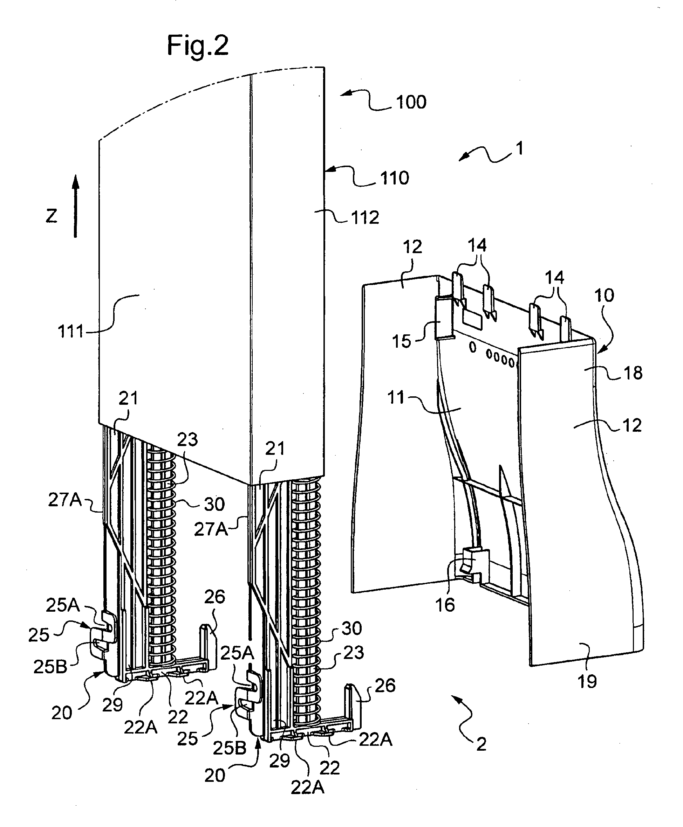

Comme le montrent les figures 1 et 2, chaque support 20 comporte principalement une aile rigide 21 de faible épaisseur, renforcée sur ses deux faces par des nervures de rigidification.

Cette aile rigide 21 présente une partie d'extrémité basse 29 (ou « partie d'extrémité externe ») agencée pour prendre appui contre le sol, une partie d'extrémité haute 28 (ou « partie d'extrémité interne ») à engager dans le tronçon de goulotte 100, une tranche avant 27B orientée vers le capot 10, et une tranche arrière 27A opposée.

La partie d'extrémité haute 28 de l'aile rigide 21 est ici agencée pour guider le support 20 dans le tronçon de goulotte 100. Elle forme ainsi l'élément de guidage du support 20 correspondant.

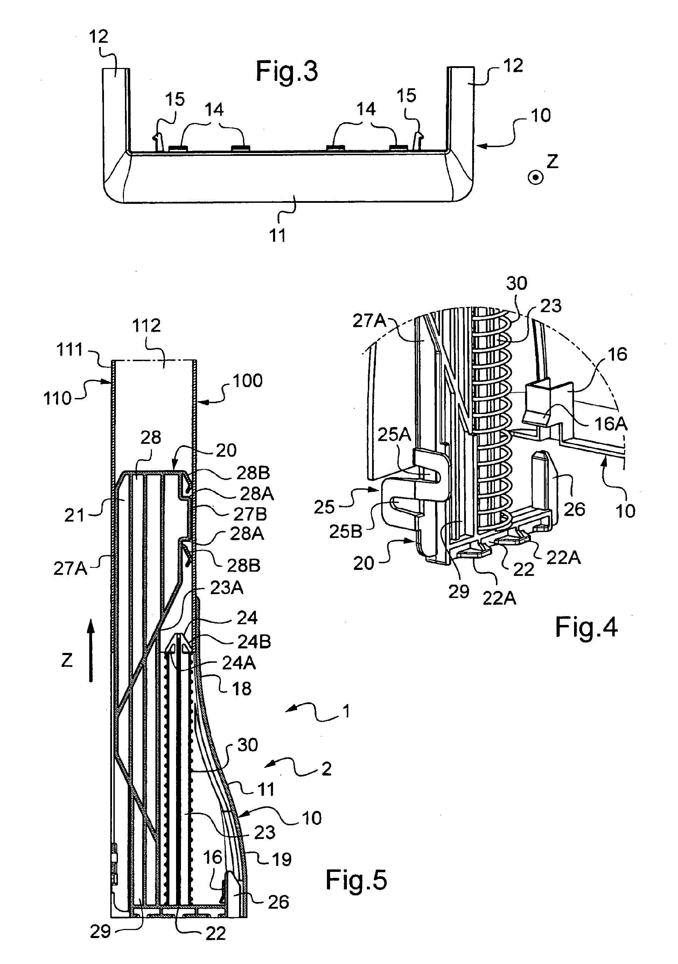

Elle présente à cet effet une largeur égale, au jeu près, à la hauteur des ailes latérales 112 du socle 110 (figure 5), et une épaisseur égale, au jeu près, à la largeur des rainures 115A, 117A formées par les secondes nervures longitudinales 117 et par les retours 115 et parois rentrantes 119 du socle 110 (figure 1).

Les tranches avant 27B et arrière 27A de la partie d'extrémité haute 28 de l'aile rigide 21 peuvent ainsi être engagées et coulisser dans ces rainures 115A, 117A. De cette manière, l'aile rigide 21 peut librement naviguer dans le socle 110, depuis la position déployée (représentée sur la figure 5) dans laquelle seule sa partie d'extrémité haute 28 est engagée dans le tronçon de goulotte 100, jusqu'à la position rentrée dans laquelle seule sa partie d'extrémité basse 29 fait saillie hors du tronçon de goulotte 100.

Chaque support 20 comporte ici des moyens de maintien de la partie d'extrémité haute 28 de l'aile rigide 21 dans le tronçon de goulotte 100.

Ces moyens de maintien comportent deux languettes élastiquement déformables 28B (figure 5) logées dans deux échancrures 28A formées dans la tranche avant 27B de l'aile rigide 21, du côté de sa partie d'extrémité haute 28.

Ces deux languettes élastiquement déformables 28B sont agencées pour se déformer en flexion contre les faces arrière des retours 115 du socle 110 lors de la mise en place de l'aile rigide 21 dans le tronçon de goulotte 100.

Ainsi, lorsque les moyens de rappel élastique 30 n'exercent plus aucun effort sur les supports 20, l'effort de flexion qu'exercent ces languettes élastiquement déformables 28B permet de bloquer l'aile rigide 21 contre la paroi de fond 111 du socle 110 du tronçon de goulotte 100, afin de retenir la partie d'extrémité haute 28 de l'aile rigide 21 dans le tronçon de goulotte 100.

Par conséquent, ces languettes élastiquement déformables 28B facilitent la mise en place de la goulotte 1 contre le mur en permettant à l'installateur de manipuler la goulotte 1 sans prêter attention à ce que les supports 20 ne s'échappent pas du tronçon de goulotte 100.

Pour optimiser la stabilité de l'accessoire de prolongement 2 sur le sol lors de la mise en place de la goulotte 1 contre le mur, chaque support 20 comporte un pied 22 (figure 4) rattaché à la partie d'extrémité basse 29 de l'aile rigide 21.

Ce pied 22 se présente ici sous la forme d'une tige de section rectangulaire qui s'étend en longueur depuis la tranche arrière 27A de l'aile rigide 21 jusqu'en avant de sa tranche avant 27B. Ce pied 22 porte sur chacun de ses flancs deux pattes horizontales 22A de formes triangulaires qui permettent d'optimiser l'assise du support 20 sur le sol.

Chaque support 20 comporte par ailleurs des moyens de fixation 25 agencés pour fixer la partie d'extrémité basse 29 de l'aile rigide 21 sur le mur.

Ces moyens de fixation 25 comportent ici une plaquette en forme de S qui s'étend dans un plan orthogonal au plan de l'aile rigide 21, et dont les extrémités et le centre se raccordent à la tranche arrière 27A de l'aile rigide 21 en formant de part et d'autre de celle-ci deux ouvertures d'accueil 25A, 25B de deux vis de fixation (non représentées).

Ici, chaque support 20 est équipé de ses propres moyens de rappel élastique 30 pour rappeler son aile rigide 21 en position déployée. Les moyens de rappel élastique de chaque aile rigide 21 comportent en l'espèce un simple ressort de compression 30, peu onéreux, interposé entre une partie externe du support 20 (le pied 22) et une partie du tronçon de goulotte 100, venant de formation par moulage d'une seule pièce avec ce tronçon de goulotte 100 (l'extrémité basse du tronçon).

Les ressorts de compression 30 des deux supports 20 présentent des raideurs telles qu'une fois comprimés sur 1 cm, la somme des forces exercées par les ressorts est supérieure au poids du tronçon de goulotte 100. Ainsi, les deux ressorts de compression 30 sont adaptés à maintenir l'extrémité haute du tronçon de goulotte 100 en appui contre le plafond.

Pour guider les ressorts de compression 30, chaque support 20 comporte une tige de guidage 23 sur laquelle est engagé l'un des ressorts de compression 30.

Cette tige de guidage 23 présente une section transversale en forme de croix et s'élève à partir du pied 22 du support 20, parallèlement à l'aile rigide 21, jusqu'à proximité de la partie d'extrémité haute 28 de cette aile rigide 21.

La tige de guidage 23 est ici logée dans une encoche 23A (figure 5) formée par un rétrécissement de largeur de l'aile rigide 21. Ainsi, cette tige de guidage 23 court le long de la tranche avant 27B de l'aile rigide 21, si bien qu'elle ne forme pas obstacle au coulissement du support 20 dans le socle 110 du tronçon de goulotte 100.

La tige de guidage 23 est plus précisément agencée de telle sorte que, lorsque l'aile rigide 21 coulisse depuis sa position déployée jusqu'à sa positon rentrée dans le tronçon de goulotte 100, la tige de guidage 23 s'engage dans la rainure 115A formée par le retour 115 et la paroi rentrante 119 correspondante du tronçon de goulotte 100.

Pour éviter que le ressort de compression 30 ne sorte de la tige de guidage 23 lorsque le support 20 n'est pas encore engagé dans le tronçon de goulotte 100, l'extrémité libre de la tige de guidage 23 est équipée de moyens de retenue 24 du ressort de compression 30. Ces moyens de retenue sont ici formés par deux pattes 24A, 24B souples en flexion, orientées de manière à former une flèche avec la tige de guidage 23. Ainsi orientées, ces deux pattes 24A, 24B permettent l'engagement du ressort de compression 30 sur la tige de guidage 23 mais interdisent l'extraction du ressort de compression 30 hors de la tige de guidage 23.

Dans ce mode de réalisation de la goulotte 1, il est prévu un unique capot 10 profilé de section transversale en U, avec une paroi frontale 11 et deux parois latérales 12. Sa section transversale présente une taille croissante depuis son extrémité haute vers son extrémité basse.

Sa partie d'extrémité haute 18 présente plus particulièrement une section dont la taille est ajustée pour que ses parois latérales 12 s'appliquent contre les faces externes des ailes latérales 112 du socle 110 du tronçon de goulotte 100 et pour que sa paroi frontale recouvre le couvercle de fermeture de ce tronçon de goulotte 100. Sa partie d'extrémité basse 19 présente une section de taille plus importante, de manière qu'elle enveloppe l'ensemble des deux supports 20, leurs pieds 22 y compris.

La longueur de ce capot 10 est par ailleurs strictement supérieure au débattement maximum de l'aile rigide 21 entre sa position déployée et sa positon rentrée dans le tronçon de goulotte 100.

Ce capot 10 est réalisé d'une seule pièce par moulage d'une matière isolante telle que le plastique.

Pour assembler le capot 10 sur le tronçon de goulotte 100 équipé des deux supports 20, il est prévu, d'une part, des moyens de positionnement et de guidage 16, 26 du capot 10 sur les supports 20, et, d'autre part, des moyens de fixation 14, 15 du capot 10 sur le tronçon de goulotte 100.

Tels que représentés sur la figure 4, les moyens de positionnement et de guidage du capot 10 sur les supports 20 comportent, sur le capot 10, deux brides 16 de section en U qui s'étendent à partir de la face intérieure de la paroi frontale 11 du capot 10, perpendiculairement à celle-ci, en direction des supports 20. Ils comportent en correspondance, sur chaque support 20, un doigt vertical 26 qui s'élève à partir de l'extrémité libre avant du pied 22, perpendiculairement à celui-ci.

Les brides 16 et les doigts verticaux 26 sont agencés sur le capot 10 et sur les supports 20 de manière à pouvoir être engagés par coulissement les uns dans les autres. Pour faciliter cet engagement, l'embouchure de chaque bride 16 comporte ici un pan incliné 16A qui forme une rampe de guidage pour les doigts verticaux 26.

Lors de la mise en place du capot 10 sur les supports 20, les doigts verticaux 26 permettent ainsi de guider le capot 10 dans une position adéquate, contre le mur et dans le prolongement du tronçon de goulotte 100.

Ces moyens de positionnement et de guidage 16, 26 du capot 10 sur les supports 20 sont plus précisément agencés de telle manière qu'une fois engagés les uns dans les autres, le bord inférieur du capot 10 s'étende à la même hauteur que les bords inférieurs des supports 20, en l'espèce à la hauteur du sol ou du plafond.

Tels que représentés sur les figures 2 et 3, les moyens de fixation 14, 15 du capot 10 sur le tronçon de goulotte 100 comportent, d'une part, des moyens d'encliquetage 15 du capot 10 sur les ailes latérales 112 du tronçon de goulotte 100, et, d'autre part, des moyens d'accroche 14 du capot 10 à la face arrière du couvercle de fermeture du tronçon de goulotte 100.

Les moyens d'encliquetage comprennent deux pattes 15 qui s'étendent à partir de la partie d'extrémité haute 18 de la face arrière de la paroi frontale 11 du capot 10, perpendiculairement à celle-ci, en direction de la paroi de fond 111 du socle du tronçon de goulotte 100. Ces deux pattes 15 comprennent sur leurs bords d'extrémité des dents agencées pour s'encliqueter dans les rainures 118B prévues sur les faces en vis-à-vis des parois rentrantes 119 du socle 110.

Ces moyens d'encliquetage 15 permettent de maintenir le capot 10 sur le tronçon de goulotte 100, le temps que l'installateur installe le couvercle de fermeture sur le socle 110 du tronçon de goulotte 100.

Les moyens d'accroche comprennent quant à eux quatre languettes 14 qui s'étendent selon l'axe longitudinal du capot 10, à partir de la partie d'extrémité haute 18 de la face arrière de la paroi frontale 11 du capot 10, jusqu'au-delà de l'extrémité de la paroi frontale 11 du capot 10.

Ces moyens d'accroche permettent de bloquer le capot 10 sur le tronçon de goulotte 100 afin qu'il ne puisse pas être extrait de la goulotte 1 avant que le couvercle de fermeture n'ait été retiré du socle 110.

Le montage de la goulotte 1 est réalisé de la manière suivante.

Préalablement à la mise en place de la goulotte 1 contre le mur, les ressorts de compression 30 sont engagés sur les tiges de guidage 23 des supports 20. Les ailes rigides 21 des supports 20 sont alors enfilées dans les rainures 115A, 117A du socle 110 du tronçon de goulotte 100 jusqu'à la position déployée dans laquelle les ressorts de compression 30 viennent au contact de l'extrémité correspondante du socle 110 du tronçon de goulotte 100 et dans laquelle les languettes élastiquement déformables 28B des supports 20, déformées en flexion, maintiennent les supports 20 dans le socle 110.

Le socle 110 du tronçon de goulotte 100, ainsi équipé des deux supports 20, est ensuite mis en place contre le mur. Pour cela, l'installateur positionne les pieds 22 des supports 20 contre le sol. Il exerce ensuite un effort sensiblement vertical sur le socle 110 de manière à comprimer les ressorts de compression 30 et à faire coulisser les ailes rigides 21 des supports dans le socle 110 jusqu'à la position rentrée. La longueur totale du socle 110 équipé des deux supports 20 étant ainsi réduite, l'installateur peut correctement positionner le tronçon de goulotte 100 contre le mur. Enfin, l'installateur relâche son effort de telle manière que les deux ressorts de compression 30 poussent le socle 110 du tronçon de goulotte 100 vers le haut, en appui contre le plafond. Le socle 110 du tronçon de goulotte 100 équipé des deux supports 20 est ainsi maintenu fixe contre le mur grâce aux ressorts de compression 30.

Les supports 20 sont alors facilement vissés sur le mur au moyen de quatre vis engagées dans les quatre ouvertures 25A, 25B.

Le capot 10 est ensuite mis en place sur les supports 20, en engageant ses brides 16 sur les doigts verticaux 26 des supports 20 puis en poussant son extrémité haute 18 contre le socle 110 du tronçon de goulotte 100, de telle manière que les dents de ses deux pattes 15 s'encliquettent dans les rainures 118B prévues sur les faces en vis-à-vis des deux parois rentrantes 119 du socle 110.

Enfin, le couvercle de fermeture du socle 110, coupé à la longueur adéquate en fonction de la pose éventuelle d'un tableau électrique (non représenté sur les figures), est rapporté sur le socle 110 de telle manière que l'un de ses bords d'extrémité s'applique contre le plafond et que son bord d'extrémité opposé s'engage entre la paroi frontale 11 et les languettes 14 du capot 10.

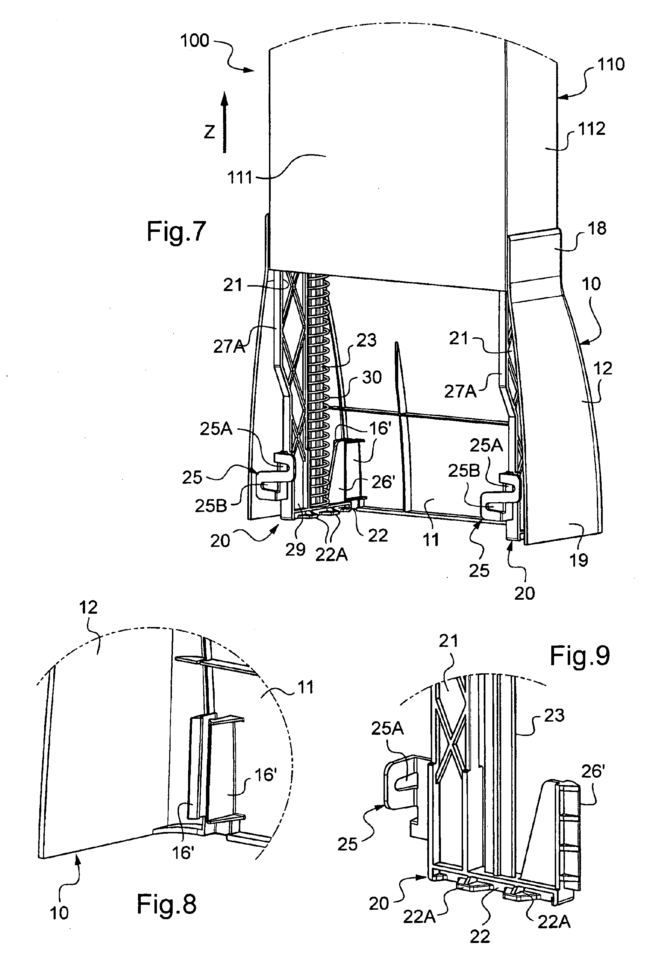

Dans la variante de réalisation de la goulotte 1 représentée sur les figures 7 à 9, le capot 10 est dépourvu de moyens de fixation aptes à coopérer avec le socle 110 du tronçon de goulotte 100.

Il comporte alors seulement, d'une part, des moyens d'accroche 14 à la face arrière du couvercle de fermeture du tronçon de goulotte 100, et, d'autre part, des moyens de fixation 16', 26' sur les supports 20.

Les moyens d'accroche, formés par quatre languettes 14 verticales, sont ici identiques à ceux représentés sur la figure 1.

Les moyens de fixation 16', 26', représentés sur les figures 8 et 9, présentent quant à eux une architecture différente.

Ces moyens de fixation comportent, sur chaque support 20, un doigt d'arrimage 26' qui s'élève verticalement à partir de l'extrémité libre avant du pied 22, perpendiculairement à celui-ci. Chaque doigt d'arrimage 26' présente une section transversale en forme de flèche orientée vers le capot 10.

Ces moyens de fixation comportent en correspondance, sur le capot 10, deux paires de pattes 16' qui s'étendent à partir de la partie d'extrémité basse 19 de la face arrière de la paroi frontale 11 du capot 10, perpendiculairement à celle-ci, en direction des doigts d'arrimage 26' des supports 20. Les pattes 16' de chaque paire s'étendent à faible distance l'une de l'autre et comprennent sur leurs bords d'extrémité des dents d'encliquetage en vis-à-vis.

De cette manière, les dents d'encliquetage des pattes 16' de chaque paire sont agencées pour s'accrocher de part et d'autre de la flèche formée par le doigt d'arrimage 26' correspondant afin d'immobiliser le capot 10 sur les supports 20.

Selon une autre variante de réalisation de la goulotte non représentée sur les figures, on pourra prévoir que les deux supports de l'accessoire de prolongement ne soient pas identiques.

Dans cette variante, les pieds des supports et les moyens de fixation des supports sur le mur diffèrent de ceux représentés sur les figures 1 à 6.

Plus particulièrement, les pieds des supports ne sont équipés de pattes horizontales de formes triangulaires que du côté de leurs flancs intérieurs en vis-à-vis. Les plaquettes des moyens de fixation des supports sur le mur ne s'étendent par ailleurs que du côté des faces intérieures des ailes rigides 21 en vis-à-vis.

De cette manière, ni les pieds des supports, ni les moyens de fixation des supports sur le mur ne débordent du côté extérieur des ailes rigides des supports, ce qui permet de rapporter deux goulottes côte-à-côte sans que les pieds ou les moyens de fixation des supports des accessoires de prolongement des deux goulottes ne viennent interférer les uns avec les autres.

Dans le second mode de réalisation représenté sur les figures 10 et 11, la goulotte 1 comporte deux tronçons de goulotte 100 à raccorder dans le prolongement l'un de l'autre. Ces deux tronçons de goulotte 100 présentent des longueurs qui sont indifféremment identiques ou différentes, mais dont la somme est inférieure à la hauteur du mur sur lequel ils sont rapportés. L'accessoire de prolongement 52 est alors interposé entre ces deux tronçons de goulotte 100 pour les prolonger.

Dans ce mode de réalisation, l'accessoire de prolongement 52 comporte un unique support 70, et deux capots 60 à rapporter de part et d'autre de ce support 70. Ces trois éléments 60, 70 sont chacun réalisés d'une seule pièce par moulage d'une matière isolante telle que le plastique.

Ces support 70 et capots 60 sont des profilés qui s'étendent en longueur suivant l'axe vertical Z et qui présentent chacun un plan de symétrie horizontal. Ils présentent donc chacun deux parties d'extrémité 68, 69, 78, 79 de formes identiques, dont une partie d'extrémité haute 68, 78 agencée pour être rapportée sur l'un des tronçons de goulotte 100 (le tronçon supérieur) et une partie d'extrémité basse 69, 79 agencée pour être rapportée sur l'autre tronçon de goulotte 100 (le tronçon inférieur).

Comme le montre la figure 10, le support 70 présente une section transversale en U. Il comporte donc une paroi de fond 72 et deux flancs latéraux 71.

Sa paroi de fond 72 est plane et présente une largeur égale à la distance séparant les deux secondes nervures longitudinales 117 de la paroi de fond 111 de chaque socle 110 de tronçon de goulotte 100.

La paroi de fond 72 du support 70 présente en outre quatre fentes longitudinales 74, dont deux fentes hautes agencées pour coulisser sur les deux premières nervures longitudinales 114 du socle 110 du tronçon de goulotte 100 supérieur, et deux fentes basses agencées pour coulisser sur les deux premières nervures longitudinales 114 du socle 110 du tronçon de goulotte 100 inférieur.

Ces fentes longitudinales 74 hautes et basses sont alignées deux à deux mais ne communiquent pas. Elles sont séparées par des parties rigides 77 permettant à la paroi de fond 72 du support 70 de se présenter sous la forme d'une seule pièce.

Ces fentes longitudinales 74 présentent des longueurs suffisantes pour que le support 70 puisse naviguer dans chaque socle 110 jusqu'à la position rentrée, dans laquelle plus du tiers de la longueur du support 70 est engagé à l'intérieur de ce socle 110.

La paroi de fond 72 comporte par ailleurs des moyens de fixation 75 du support 70 sur le mur. Ces moyens de fixation 75 comportent ici deux ouvertures d'accueil 75A, 75B de deux vis de fixation (non représentées), situées à mi-longueur de cette paroi de fond 72, de part et d'autre des deux parties rigides 77.

Les flancs latéraux 71 du support 70 forment ici deux éléments de guidage du support 70 dans les tronçons de goulotte 100.

Ils se présentent à cet effet sous la forme de deux ailes rigides 71 parallèles, renforcées sur leurs faces extérieures par des nervures de rigidification.

Ces deux ailes rigides 71 sont agencées pour guider le coulissement du support 70 dans les socles 110 des deux tronçons de goulotte 100. Elles présentent à cet effet des largeurs égales, au jeu près, à la hauteur des ailes latérales 112 des socles 110, et des épaisseurs égales, au jeu près, à la largeur des rainures 115A, 117A formées par les secondes nervures longitudinales 117 et par les retours 115 et parois rentrantes 119 des socles 110.

De cette manière, les ailes rigides 71 peuvent librement naviguer dans le socle 110 du tronçon de goulotte 100, depuis la position déployée (figure 11) jusqu'à la position rentrée.

Ces ailes rigides 71 comportent chacune une portion centrale 71A carrée qui s'étend dans un plan légèrement décalé vers l'extérieur du support 70 par rapport au plan du reste de l'aile rigide.

Cette portion centrale 71A forme ainsi deux épaulements 71 B respectivement tournés vers le haut et vers le bas du support 70. Ces deux épaulements 71 B constituent des butées contre lesquelles les extrémités des socles 110 des deux tronçons de goulotte 100 viennent en appui lorsque les ailes rigides 71 sont en position rentrée dans ces tronçons de goulotte 100.

Dans ce mode de réalisation, les moyens de rappel élastique 80 des ailes rigides 71 en position déployée comportent quatre ressorts de compression 81, 82 interposés entre une partie externe 73C du support 70 et l'extrémité de l'un ou l'autre des tronçons de goulotte 100.

Pour loger ces ressorts de compression 81, 82, la paroi de fond 72 se raccorde aux ailes rigides 71 du support 70 par deux zones de jonction 72C en forme de gouttière de section en quart de cercle ouvert vers l'extérieur du support 70. Deux ressorts de compression 81, 82 sont logés dans chaque gouttière 72C.

Les parties externes 73C contre lesquelles s'appuient les ressorts de compression 81, 82 sont alors formées par deux lamelles 73C qui s'étendent à mi-longueur de ces gouttières 72C, de telle manière que les deux ressorts de compression 81, 82 logés dans chaque gouttière 72C prennent appui de part et d'autre de la lamelle 73C correspondante.

Pour guider ces ressorts de compression 81, 82, le support 70 comporte quatre tiges de guidage 73A, 73B sur chacune desquelles est engagé l'un des ressorts de compression 81, 82.

Chaque tige de guidage 73A, 73B s'étend à partir de l'une des faces de l'une des deux lamelles 73C, à l'intérieur de l'une des gouttières 72C, jusqu'à proximité de la partie d'extrémité haute ou basse du support 70. Ainsi, les tiges de guidage 73A, 73B ne forment pas obstacle au coulissement du support 70 dans les socles 110 des tronçons de goulotte 100.

Dans ce mode de réalisation, les capots 60 présentent des formes identiques et sont agencés pour être rapportés sur les faces extérieures des deux ailes rigides 71 du support 70. Ils présentent des longueurs identiques à celle du support 70.

Chaque capot 60 présente une section transversale en forme de L, avec une paroi principale 61 plane à appliquer contre l'une des ailes rigides 71 du support 70, et un rebord avant 62 recourbé à angle droit pour recouvrir les tranches des ailes rigides 71 du support 70. Chaque capot 60 est en outre agencé pour recouvrir par ses extrémités haute 68 et basse 69 les ailes latérales 112 des socles 110 des deux tronçons de goulotte 100.

Pour son montage, chaque capot 60 comporte, d'une part, des moyens de positionnement 63 sur le support 70, et, d'autre part, des moyens de fixation et d'accroche 64 agencés pour se fixer et s'accrocher au couvercle de fermeture des tronçons de goulotte 100.

Les moyens de positionnement 63 de chaque capot 60 sur le support 70 comportent ici une languette 63 qui s'étend à partir de la face intérieure de la paroi principale 61 du capot 60, perpendiculairement à celle-ci, et qui est recourbée à angle droit vers la paroi de fond 72 du support 70.

La portion centrale 71A de chaque aile rigide 71 du support 70 comporte en correspondance une ouverture 76 globalement rectangulaire, au travers de laquelle peut s'engager la partie recourbée de la languette 63 du capot 60.

Les moyens d'accroche 64 de chaque capot 60 au couvercle de fermeture comportent quant à eux une languette 64 qui s'étend à partir de la tranche d'extrémité 67 du rebord avant 62 du capot 60, et qui est repliée en U pour former une rainure 64A ouverte vers l'avant de la goulotte 51.

Cette rainure 64A est agencée pour être située dans le prolongement des gorges longitudinales 118A prévues sur les parois rentrantes 119 des socles 110 des deux tronçons de goulotte 100. Ainsi, lors de la mise en place du couvercle de fermeture dans les gorges longitudinales 118A des socles 110 des deux tronçons de goulotte 100, les pattes d'engagement de ce couvercle de fermeture s'engagent dans cette rainure 64A, ce qui permet d'immobiliser le capot 60 sur le support 70.

Le montage de la goulotte 51 est réalisé de la manière suivante.

Préalablement à la mise en place de la goulotte 51 contre le mur, les ressorts de compression 81, 82 sont engagés sur les tiges de guidage 73A, 73B du support 70. Les ailes rigides 71 du support 70 sont alors enfilées dans les rainures 115A, 117A des socles 110 des deux tronçons de goulotte 100 jusqu'à la position déployée dans laquelle les ressorts de compression 81, 82 viennent au contact des extrémités correspondantes des socles 110.

Les socles 110 des deux tronçons de goulotte 100, entre lesquels est interposé le support 70, sont ensuite mis en place contre le mur. Pour cela, l'installateur comprime les ressorts de compression 81, 82 en rapprochant les deux socles 110 l'un de l'autre. Il positionne ensuite cet ensemble contre le mur, puis il relâche son effort de telle manière que les ressorts de compression 81, 82 poussent les socles 110 des deux tronçons de goulotte 100 respectivement vers le sol et vers le plafond.

Le support 70 est alors facilement vissé sur le mur au moyen de deux vis engagées dans les deux ouvertures d'accueil 75A, 75B.

Les capots 60 sont ensuite mis en place sur le support 70, en engageant leurs languettes 63 dans les ouvertures 76 prévues sur les ailes rigides 71 du support 70.

Enfin, le couvercle de fermeture du socle 110, coupé à la longueur adéquate, est rapporté sur les deux socles 110 de telle manière qu'il les recouvre entièrement et qu'il recouvre également l'accessoire de prolongement 52. Ainsi, les pattes d'engagement du couvercle de fermeture s'engagent dans les languettes 64 des capots 60 pour les immobiliser.

La présente invention n'est nullement limitée aux deux modes de réalisation décrits et représentés, mais l'homme du métier saura y apporter toute variante conforme à son esprit.

En particulier, on pourra prévoir que l'accessoire de prolongement utilisé comme embout à l'extrémité d'un tronçon de goulotte présente non pas deux supports (figure 1), mais au contraire un unique support du type de celui représenté sur la figure 10.

A contrario, on pourra également prévoir que l'accessoire de prolongement utilisé comme accessoire de jonction interposé entre deux tronçons de goulotte présente non pas un support (figure 10), mais au contraire deux supports distincts du type de ceux représentés sur la figure 1.

On pourra également prévoir de combiner plusieurs accessoires de prolongement sur un même tronçon de goulotte, en agençant deux accessoires de prolongement (identiques ou non) aux deux extrémités de ce tronçon de goulotte.

## Revendications

1. Accessoire de prolongement (2 ; 52) d'un tronçon de goulotte (100), comportant :
- au moins un support (20 ; 70) comprenant au moins un élément de guidage (21 ; 71) adapté à être monté mobile en translation sur ledit tronçon de goulotte (100) entre une position rentrée à l'intérieur dudit tronçon de goulotte (100) et une position déployée dans le prolongement dudit tronçon de goulotte (100), et
- au moins un capot (10 ; 60) à rapporter au-dessus dudit support (20 ; 70), et qui comporte à cet effet des moyens de positionnement (16 ; 63) sur ledit support (20 ; 70),
**caractérisé en ce que** ledit support (20 ; 70) comporte des moyens de rappel élastique (30 ; 80) dudit élément de guidage (21 ; 71) en position déployée.

2. Accessoire de prolongement (2 ; 52) selon la revendication 1, **caractérisé en ce que** lesdits moyens de rappel élastique comportent au moins un ressort de compression (30 ; 81, 82) à interposer entre une partie externe (22 ; 73C) dudit support (20 ; 70) et ledit tronçon de goulotte (100).

3. Accessoire de prolongement (2 ; 52) selon la revendication 2, **caractérisé en ce que** chaque support (20 ; 70) comporte une tige de guidage (23 ; 73A, 73B) qui s'étend à partir de ladite partie externe (22 ; 73C) du support (20 ; 70) et sur laquelle est engagé ledit ressort de compression (30 ; 81, 82).

4. Accessoire de prolongement (2 ; 52) selon la revendication 3, **caractérisé en ce que** ladite tige de guidage (23 ; 73A, 73B) comporte des moyens de retenue (24) du ressort de compression (30 ; 81, 82).

5. Accessoire de prolongement (2) selon l'une des revendications 1 à 4, **caractérisé en ce qu'**il comporte deux supports (20) distincts comprenant chacun un élément de guidage (21).

6. Accessoire de prolongement (2) selon la revendication 5, **caractérisé en ce que** chaque élément de guidage comporte une aile rigide (21) dont la section est ajustée pour coulisser dans des rainures (115A, 117A) prévues à l'intérieur du socle (110) et/ou du couvercle dudit tronçon de goulotte (100).

7. Accessoire de prolongement (52) selon l'une des revendications 1 à 4, **caractérisé en ce qu'**il comporte un unique support (70) présentant la forme d'un profilé de section transversale en U, avec une paroi de fond (72) bordée de deux flancs latéraux (71) formant deux éléments de guidage.

8. Accessoire de prolongement (52) selon la revendication 7, **caractérisé en ce que** la paroi de fond (72) du support (70) présente des fentes longitudinales (74) adaptées à recevoir par coulissement des nervures longitudinales (114) prévues sur le socle (110) du tronçon de goulotte (100).

9. Accessoire de prolongement (2) selon l'une des revendications 1 à 8, **caractérisé en ce qu'**il est prévu un unique capot (10) qui est un profilé de section transversale en U.

10. Accessoire de prolongement (2) selon la revendication 9, **caractérisé en ce que** chaque support (20) présente deux extrémités de formes différentes, l'une des extrémités (28), dite extrémité interne, étant agencée pour être engagée dans ledit tronçon de goulotte (100) et l'autre extrémité (29), dite extrémité externe, portant un pied (22) agencé pour s'appliquer contre une paroi plane.

11. Accessoire de prolongement (52) selon l'une des revendications 1 à 8, **caractérisé en ce qu'**il comporte deux capots (60) profilés sensiblement plats.

12. Accessoire de prolongement (52) selon la revendication 11, **caractérisé en ce que** chaque support (70) présente deux extrémités de formes identiques.

13. Accessoire de prolongement (2 ; 52) selon l'une des revendications 1 à 12, **caractérisé en ce que** chaque support (20 ; 70) comporte des moyens de fixation (25 ; 75) à une paroi.

14. Accessoire de prolongement (2) selon l'une des revendications 1 à 13, **caractérisé en ce que** ledit capot (10) comporte des moyens de fixation (14, 15; 64) sur ledit tronçon de goulotte (100).

15. Goulotte (1 ; 51) à rapporter sur une paroi, comportant un tronçon de goulotte (100) comprenant un socle (110) et un couvercle rapporté sur le socle (110), **caractérisé en ce qu'**il comporte un accessoire de prolongement (2 ; 52) selon l'une des revendications 1 à 14, fixé à l'une des extrémités du tronçon de goulotte (100).

## Patentansprüche

1. Verlängerungszubehör (2; 52) für einen Kabelkanalabschnitt (100), das umfasst:
- mindestens eine Fassung (20; 70) mit mindestens einem Führungselement (21; 71), das auf dem Kabelkanalabschnitt (100) zwischen einer in den Kabelkanalabschnitt (100) eingefahrenen Position und einer, den Kabelkanalabschnitt (100) verlängernden, ausgefahrenen Position verschiebbar montiert werden kann, und
- mindestens eine Abdeckung (10;60), die auf der Fassung (20; 70) anzubringen ist, und die dazu auf dieser Fassung (20;70) Positionierungsmittel (16; 63) umfasst,
**dadurch gekennzeichnet, dass** die Fassung (20; 70) elastische Rückholmittel (30; 80) für das Führungselement (21; 71) in der ausgefahrenen Position umfasst.

2. Verlängerungszubehör (2; 52) nach Anspruch 1, **dadurch gekennzeichnet, dass** die elastischen Rückholmittel mindestens eine Druckfeder (30; 81, 82) umfassen, die zwischen einem externen Abschnitt (22;73C) der Fassung (20; 70) und dem Kabelkanalabschnitt (100) dazwischen zu setzen ist.

3. Verlängerungszubehör (2;52) nach Anspruch 2, **dadurch gekennzeichnet, dass** jede Fassung (20; 70) einen Führungsstift (23; 73A, 73B) umfasst, der sich ab dem externen Abschnitt (22;73C) der Fassung (20;70) erstreckt und auf dem die Druckfeder (30; 81,82) eingreift.

4. Verlängerungszubehör (2;52) nach Anspruch 3, **dadurch gekennzeichnet, dass** der Führungsstift (23;73A;73B) Rückhaltemittel (24) für die Druckfeder (30; 81,82) umfasst.

5. Verlängerungszubehör (2) nach einem der Ansprüche 1 bis 4, **dadurch gekennzeichnet, dass** es zwei unterschiedliche Fassungen (20) umfasst, die jeweils ein Führungselement (21) aufweisen.

6. Verlängerungszubehör (2) nach Anspruch 5, **dadurch gekennzeichnet, dass** jedes Führungselement einen starren Flügel (21) aufweist, dessen Querschnitt justiert ist, um in auf der Innenseite des Sockels (110) und/oder des Deckels des Kabelkanalabschnittes (100) vorgesehene Nuten (115A,117A) zu gleiten.

7. Verlängerungszubehör (52) nach einem der Ansprüche 1 bis 4, **dadurch gekennzeichnet, dass** es eine einzige Fassung (70) mit der Form eines U-Querprofils aufweist, mit einer Rückwand (72), die von zwei Seitenflanken (71), die zwei Führungselemente bilden, abgegrenzt ist.

8. Verlängerungszubehör (52) nach Anspruch 7, **dadurch gekennzeichnet, dass** die Rückwand (72) der Fassung (70) Längsschlitze (74) aufweist, die am Sockel (110) des Kabelkanalabschnitts (100) vorgesehene Längsrippen (114) gleitend aufnehmen können.

9. Verlängerungszubehör (2) nach einem der Ansprüche 1 bis 8, **dadurch gekennzeichnet, dass** eine einzige Abdeckung (10) in Form eines U-Querprofils vorgesehen ist.

10. Verlängerungszubehör (2) nach Anspruch 9, **dadurch gekennzeichnet, dass** jede Fassung (20) zwei Enden mit unterschiedlichen Formen aufweist, wobei eins der Enden (28), das als internes Ende bezeichnet wird, angeordnet ist, um in den Kabelkanalabschnitt (100) einzugreifen und das andere Ende (29), das als externes Ende bezeichnet wird, einen Fuß (22) aufweist, der angeordnet ist, um auf einer flachen Wand aufzuliegen.

11. Verlängerungszubehör (52) nach einem der Ansprüche 1 bis 8, **dadurch gekennzeichnet, dass** es zwei annähernd flach profilierte Abdeckungen (60) umfasst.

12. Verlängerungszubehör (52) nach Anspruch 11, **dadurch gekennzeichnet, dass** jede Fassung (70) zwei Enden gleicher Form aufweist.

13. Verlängerungszubehör (2;52) nach einem der Ansprüche 1 bis 12, **dadurch gekennzeichnet, dass** jede Fassung (20;70) Mittel zur Befestigung (25; 75) an einer Wand umfasst.

14. Verlängerungszubehör (2) nach einem der Ansprüche 1 bis 13, **dadurch gekennzeichnet, dass** die Abdeckung (10) Mittel zur Befestigung (14, 15, 64) auf dem Kabelkanalabschnitt (100) umfasst.

15. Kabelkanal (1; 51), der an einer Wand anzubringen ist, mit einem Kabelkanalabschnitt (100), der einen Sockel (110) und einen auf den Sockel (110) aufgesteckten Deckel umfasst, **dadurch gekennzeichnet, dass** er ein Verlängerungszubehör (2; 52) nach einem der Ansprüche 1 bis 14 umfasst, das an einem der Enden des Kabelkanalabschnitts (100) fixiert ist.

## Claims

1. An extension accessory (2; 52) for extending a duct segment (100), said accessory comprising:
· at least one support (20; 70) including at least one guide element (21; 71) that is adapted to be mounted to move in translation along said duct segment (100) between a retracted position inside said duct segment (100), and a deployed position extending said duct segment (100); and
· at least one cap (10; 60) for fitting over said support (20; 70), and that includes, for this purpose, positioner means (16; 63) for positioning on said support (20; 70);
the extension accessory being **characterized in that** said support (20; 70) includes resilient return means (30; 80) for urging said guide element (21; 71) into the deployed position.

2. An extension accessory (2; 52) according to claim 1, **characterized in that** said resilient return means comprise at least one compression spring (30; 81, 82) for interposing between an outer portion (22; 73C) of said support (20; 70) and said duct segment (100).

3. An extension accessory (2; 52) according to claim 2, **characterized in that** each support (20; 70) includes a guide rod (23; 73A, 73B) that extends from said outer portion (22; 73C) of the support (20; 70), and on which said compression spring (30; 81, 82) is engaged.

4. An extension accessory (2; 52) according to claim 3, **characterized in that** said guide rod (23; 73A, 73B) includes holding means (24) for holding the compression spring (30; 81, 82).

5. An extension accessory (2) according to any one of claims 1 to 4, **characterized in that** it includes two distinct supports (20), each including a respective guide element (21).

6. An extension accessory (2) according to claim 5, **characterized in that** each guide element comprises a rigid spline (21) having a section that is dimensioned so as to slide in grooves (115A, 117A) provided inside the base (110) and/or the cover of said duct segment (100).

7. An extension accessory (52) according to any one of claims 1 to 4, **characterized in that** it includes a single support (70) presenting a channel section, with a web (72) bordered by two flanges (71) forming two guide elements.

8. An extension accessory (52) according to claim 7, **characterized in that** the web (72) of the support (70) presents longitudinal slots (74) that are adapted to slidably receive longitudinal rails (114) that are provided on the base (110) of the duct segment (100).

9. An extension accessory (2) according to any one of claims 1 to 8, **characterized in that** it is provided with a single cap (10) that is a section member of channel section.

10. An extension accessory (2) according to claim 9, **characterized in that** each support (20) presents two ends of different shapes, one of the ends (28), referred to as the inner end, being arranged so as to be engaged in said duct segment (100), and the other end (29), referred to as the outer end, carrying an abutment (22) that is arranged so as to bear against a plane wall.

11. An extension accessory (52) according to any one of claims 1 to 8, **characterized in that** it includes two substantially flat section member caps (60).

12. An extension accessory (52) according to claim 11, **characterized in that** each support (70) presents two ends of identical shape.

13. An extension accessory (2; 52) according to any one of claims 1 to 12, **characterized in that** each support (20; 70) includes fastener means (25; 75) for fastening to a wall.

14. An extension accessory (2) according to any one of claims 1 to 13, **characterized in that** said cap (10) includes fastener means (14, 15; 64) for fastening to said duct segment (100).

15. A duct (1; 51) for fitting on a wall, including a duct segment (100) comprising a base (110) and a cover that is fitted on the base (110), the duct being **characterized in that** it includes an extension accessory (2; 52) according to any one of claims 1 to 14, fastened to one of the ends of the duct segment (100).
